(19) Europäisches Patentamt
European Patent Office
Office européen des brevets

(11) **EP 3 823 111 B1**

(12) **EUROPEAN PATENT SPECIFICATION**

(45) Date of publication and mention
of the grant of the patent:
**07.06.2023 Bulletin 2023/23**

(21) Application number: **19209371.4**

(22) Date of filing: **15.11.2019**

(51) International Patent Classification (IPC):
*H01S 3/23* (2006.01)    *H01S 3/00* (2006.01)
*H01S 3/091* (2006.01)    *H01S 3/06* (2006.01)

(52) Cooperative Patent Classification (CPC):
**H01S 3/2325; H01S 3/0071;** H01S 3/0604

(54) **METHOD FOR AMPLIFYING A LASER BEAM, LASER AMPLIFIER SYSTEM AND OPTICAL MODULE FOR USE IN A LASER AMPLIFIER SYSTEM**

VERFAHREN ZUR VERSTÄRKUNG EINES LASERSTRAHLS, LASERVERSTÄRKERSYSTEM UND OPTISCHES MODUL ZUR VERWENDUNG IN EINEM LASERVERSTÄRKERSYSTEM

PROCÉDÉ POUR AMPLIFIER UN FAISCEAU LASER, SYSTÈME AMPLIFICATEUR DE LASER ET MODULE OPTIQUE DESTINÉ À ÊTRE UTILISÉ DANS UN SYSTÈME AMPLIFICATEUR DE LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.05.2021 Bulletin 2021/20**

(73) Proprietor: **Universität Stuttgart**
**70174 Stuttgart (DE)**

(72) Inventor: **Negel, Jan-Philipp**
**70599 Stuttgart (DE)**

(74) Representative: **Müller-Boré & Partner**
**Patentanwälte PartG mbB**
**Friedenheimer Brücke 21**
**80639 München (DE)**

(56) References cited:
**US-A- 5 546 222**      **US-A1- 2005 195 474**
**US-A1- 2006 153 257**

- **NEGEL JAN-PHILIPP ET AL: "Thin-disk multipass amplifier for ultrashort laser pulses with kilowatt average output power and mJ pulse energies", PROCEEDINGS OF SPIE/ IS & T,, vol. 9135, 1 May 2014 (2014-05-01), pages 91351D-91351D, XP060030282, DOI: 10.1117/12.2053964 ISBN: 978-1-62841-730-2**
- **OLSON T E ET AL: "Multipass diode-pumped Nd:YAG optical amplifiers at 1.06 micro-m and 1.32 micro-m", IEEE PHOTONICS TECHNOLOGY LETTERS, IEEE SERVICE CENTER, PISCATAWAY, NJ, US, vol. 6, no. 5, May 1994 (1994-05), pages 605-608, XP011411343, ISSN: 1041-1135, DOI: 10.1109/68.285555**

EP 3 823 111 B1

**Description**

The invention relates to a method for amplifying a laser beam in a laser amplifier system, a laser amplifier system for amplifying a laser beam and an optical module for use in a laser amplifier system.

In general, laser amplifier systems are used for amplifying a laser beam to achieve a certain output power of the laser beam. One exemplary approach for amplifying a laser beam involves using a disk laser as a laser active medium providing an excited area, i.e. a pump spot. The excited area and/or the pump spot is usually generated through a pump module, e.g. a laser diode, which excites the laser active medium to store energy within the laser active medium. Further, a laser beam generated by a source laser module is coupled into the laser amplifier system and the laser beam is reflected several times with a suitable optical arrangement to the same position of the pump spot by which the laser beam extracts the energy stored within the laser active medium. Known laser amplifying methods and laser amplifier systems use a laser beam having a beam size, i.e. the beam diameter, which substantially corresponds to the size of the pump spot, i.e. the diameter of the pump spot. For example, the laser beam may have a beam diameter of 8 mm and the pump spot may have a diameter of 9 mm. The number of repetitions the laser beam passes the laser active medium determines among others the level of the laser beam's amplification.

However, exemplary systems have several drawbacks. For example, the optical arrangement reflecting the laser beam several times to the pump spot requires a complex arrangement of reflectors/mirrors resulting in a bulky and expensive optical arrangement. Further, the laser beam is required to travel a long distance (propagation length of the laser beam) until the laser beam has achieved the desired level of amplification which may cause stability issues of the laser beam and makes the laser beam sensitive to thermal turbulences degrading the performance of the laser beam. Furthermore, when using an exemplary laser amplifier for high energy/peak power applications, deteriorations of the laser beam quality increase with the laser beam's propagation length due to nonlinear optical effects.

Further, US 2006/153257 A1 relates to a laser amplifier including a thin active laser solid, a cooling device in thermal contact with the thin active laser solid to provide good heat transport, and laser diodes as pump light sources tuned to the maximum absorption of the laser active material. The amplifier also includes an optical system to transport the pump light to the laser active solid in such a way as to further confine the absorption of light along the two orthogonal directions in the plane of the laser active solid.

US 2005/195474 A1 relates to a multi-pass three-dimensional amplifier structure in which a beam of light traverses an amplifier medium multiple times via distinct multiple paths.

US 5 546 222 A relates to a multiple-pass laser amplifier that uses optical focusing between subsequent passes through a single gain medium so that a reproducibly stable beam size is achieved within the gain region.

Thus, according to an aspect, the problem relates to improving the amplification of a laser beam.

Further, it is an objective of the present invention to provide a method for amplifying a laser beam, a laser amplifier system and an optical module for use in a laser amplifier system which provide a good and stable amplification of a laser beam, which allow a simple and inexpensive optical arrangement for reflecting the laser beam several times to a laser amplifier module, and which reduce the distance a laser beam has to travel though a laser amplifier system until the laser beam has achieved the desired level of amplification.

Said objective is achieved by the subject matter of the independent claims. Preferred embodiments are defined in the dependent claims.

An aspect of the invention relates to a method for amplifying a laser beam in a laser amplifier system including a laser amplifier module and an optical module, the method comprising generating an excited volume in a laser amplifier module so that a surface of the laser amplifier module facing the optical module includes an excited area. The method also comprises coupling the laser beam into the laser amplifier system, conducting a first amplifying pass by reflecting the laser beam multiple times between the optical module and the laser amplifier module. Each time the laser beam is reflected from the optical module to the laser amplifier module, the laser beam impacts on a respective impact area of the surface of the laser amplifier module. Further, the size of each impact area is smaller than the size of the excited area, and a subset of impact areas of all of the impact areas is located on distinct positions of and/or within the excited area.

Advantageously, the invention enables the laser beam to extract energy from distinct positions of and/or within the excited area so that the laser beam is amplified every time the laser beam is reflected from the optical module to a position within the excited area. Further, the invention allows that the optical module is placed close to the laser amplifier module so that the distance the laser beam must travel between the optical module and the laser amplifier module during the first amplifying pass can be kept short. Consequently, the total length the laser beam travels from coupling the laser beam to the laser amplifier system, performing the first amplifying pass until the laser beam is decoupled from the laser amplifier system can be kept relatively short. Thus, the impact of thermal turbulences to the laser beam can be reduced.

Preferably, the laser amplifier module may be a laser active medium such as a disk laser. Additionally, the laser amplifier system may comprise a pump module which pumps the laser active medium and/or the disk laser. By pumping the laser active medium and/or the disk laser, the excited volume is generated in the laser active medium. Further, a surface of the laser active medium and/or the disk laser may face the optical module and due to the excited volume of the laser active medium, said surface may include the excited area.

Preferably, the laser beam is reflected between the optical module and the laser amplifier module such that the laser beam impacts at least two times on the laser amplifier module on a respective impact area within the excited area. Further, the subset of impact areas may comprise all the impact areas so that the all impact areas are located on distinct positions within the excited area. Thus, the laser beam can extract the energy from different locations of the excited medium for amplifying the laser beam.

Further, the level of amplification of the laser beam is determined by the number of times the laser beam is reflected between the optical module and the laser amplifier module. In particular, the level of amplification of the laser beam is determined by the number of impact areas contained in the subset, i.e. the number of impact areas within the excited area. Preferably, the number of impact areas in the subset may be at least 10, more preferably at least 20. In a further embodiment, the number of impact areas in the subset may be at least 30, more preferably 40. Further, the level of amplification may be increased by increasing the size of the excited area that can be used for amplifying the laser beam at a given size of the impact area. Accordingly, the number of impact areas can be increased. Further, the maximum power intensity of the excited volume is limited so that the maximum power stored in the excited volume can be scaled by the size of the excited area.

The size of an impact area generated by the laser beam on the surface of the laser amplifier module is substantially determined by the beam diameter and/or the beam size of the laser beam. The beam size may correspond to the expansion of the laser beam perpendicular to the axis of propagation of the laser beam. However, the laser beam may correspond to a Gaussian beam having a bell-shaped intensity curve perpendicular to the axis of propagation. Thus, in theory the laser beam would have an endless expansion perpendicular to the axis of propagation. For the present disclosure, it is considered that the beam size/diameter is finite. In particular, the beam size/diameter may correspond to a finite range of the intensity profile of the laser beam perpendicular to the axis of propagation of the laser beam. For example, the beam size and/or beam diameter and/or beam width may correspond to a range between two points in the intensity profile where the intensity is $1/e^2$ of the peak value in the intensity profile of the laser beam. Further, the excited area may have a flat-top intensity profile with sharp edges determining the size of the exited area. For example, the excited area is modelled with a high-super gaussian profile.

Alternatively, the beam size and/or beam diameter and/or beam width may correspond to a full-width, half maximum (FWHM) range of the intensity profile of the laser beam, i.e. the range between the two points in the intensity profile at which the intensity is half the peak value of the intensity profile.

Alternatively, the beam size and/or beam diameter and/or beam width may correspond to the definition according to ISO 11146, i.e., based on the 2nd of the intensity profile.

Further, the laser beam may have a substantially circular cross-section in the direction of propagation. Hence, impact areas generated by the laser beam on the surface of the laser amplifier module may also have a substantially circular shape.

In accordance with an example not in accordance with the invention, the impact areas included in the subset may at most partly overlap. That is, the centres of gravity of the respective impact areas included the subset are different. Thus, every time the laser beam impinges on the excited area, the laser beam may at least partially extract energy from the excited volume that has not been impinged by the laser beam before.

Preferably, the impact areas of the subset are distributed evenly within the excited area. Advantageously, the even distribution of the impact areas allows a homogeneous extraction of the energy stored in the laser amplifier module. Further, it is possible to provide a simple arrangement of the optical module that allows the even distribution of the impact areas. Preferably, the impact areas are considered even distributed if the distance between adjacent impact areas are substantially the same throughout the subset of impact areas. Further, the distance between adjacent impact areas may be determined by the distance between the centre of gravity of said adjacent impact areas.

A centre of gravity of each impact area of the subset is located on a different position of the excited area. The centre of gravity may correspond to the center of the substantially circular shaped impact area and may be determined by the peak value in the intensity profile of the laser beam.

Adjacent impact areas are spaced apart from each other on the surface of the laser amplifier module and/or the excited area by at least 1 time the size of the impact area or preferably by at least 1,5 times the size of the impact area. In other words, the impact areas are spaced apart from each other on the surface of the laser amplifier module and/or the excited area by at least 1 time the size of the beam diameter or by at least 1,5 times the size of the beam diameter. Advantageously, by maintaining a space between the impact areas, diffraction losses can be avoided.

Preferably, a ratio between the size of the excited area and the size of each of the impact areas is substantially at least $\frac{8}{\pi}$, at least 4:1, or at least 10:1. By providing the aforementioned ratio between the size of the excited area and the size of each of the impact areas, it is possible to have at least two impact areas within the excited area which do not overlap. For example, the ratio of - between the size of the excited area and the size of each of the impact areas allows to have exactly two impact areas within an excited area having a substantially rectangular shape. Further, the width of the rectangular shape may be substantially 4 times the radius of the impact area and/or the radius of the laser beam. The height of the rectangular shape may be substantially 2 times the radius of the impact area.

Further, the ratio of 4:1 between the size of the excited area and the size of each of the impact areas allows to have exactly two impact areas on an excited area having a substantially circular shape. In particular, the radius of the excited area having a substantially circular shape may be 2 times of the radius of the impact area.

Accordingly, the ratio between the size of the excited area and the impact area may be further increased to allow the arrangement of more than two non-overlapping impact areas on the excited area allowing to reach a higher level of amplification of the laser beam. Thus, the ratio needs to be chosen dependent on the required level of laser beam amplification.

Preferably, the size of the excited area is substantially at least $\frac{4}{\pi}n$ multiplied by the size of an impact area, where n is the number of impact areas in the subset of impact areas and n is at least two. Thus, an excited area of substantially rectangular shape can be provided in which the impact areas can provided in a non-overlapping manner.

Preferably, the impact areas of the surface of the laser amplifier module are successively created in a temporal order and wherein a first number of the impact areas is successively created in a first direction on the surface of the laser amplifier module and a second number of the impact areas is successively created in a second direction on the surface of the laser amplifier module. Thus, in a top view on the excited area the excited area is scanned line wise with the laser beam. That is, the first number of impact areas created along the first direction may correspond to a first line scanned by the laser beam and the second number of the impact areas created along the second direction may correspond to a second line scanned by the laser beam. Preferably, the first direction and second direction may be parallel but opposite to each other. Further, the first direction and second direction may be parallel to the surface of the laser amplifier module.

Preferably, the number of impact areas created in the first direction may at least be two. Further, the number of impact areas created in the second direction may at least be two. The excited area and/or the surface of the laser amplifier module may include more than two lines scanned by the laser beam, wherein the first line and each second subsequent line are scanned in the first direction and the second line and each second subsequent line are scanned in the second direction. Further, the impact areas per line may be more than two. With the proposed line by line scanning, it is possible to scan substantially the complete excited area with the laser beam to extract the energy stored within the laser amplifier module. Further, it is possible to increase the excited area and consequently the amount of stored energy in the laser amplifier module without increasing the energy density within the laser amplifier module which otherwise would cause warming of the laser amplifier module. It is preferably to reduce warming of the laser amplifier module in order to avoid a decrease of the gain cross section.

Preferably, the last created impact area of the first number of impact areas is the predecessor of the first created impact area of the second number of impact areas.

Preferably, the method may further comprise the steps of, after completing the first amplifying pass, conducting a second amplifying pass by reflecting the laser beam multiple times between the optical module and the laser amplifier module, wherein each time the laser beam is reflected from the optical module to the laser amplifier module, the laser beam impacts on a second pass impact area of the surface of the laser amplifier module. The second pass impact area may be located between two successive impact areas of the first amplifying pass. Advantageously, the second amplifying pass allows to scan the excited area a second time with the laser beam to further increase the level of amplification. Further, the second pass impact areas are also different to the impact areas of the first amplifying pass leading allowing to extract energy from positions on the laser amplifier module and/or excited area that have not been scanned with the laser beam during the first amplifying pass. Thus, the energy extraction from the laser amplifier system is maximized.

The generating an excited volume may include generating the excited area having a substantially circular shape. Preferably, the excited area may have a substantially rectangular shape. The rectangular shape is advantageous as it allows a higher density of impact areas per size of the excited area compared to an excited area having the substantially circular shape.

A further aspect of the invention relates to a laser amplifier system for amplifying a laser beam, the system comprising: a laser amplifier module and an optical module, wherein the laser amplifier module includes an excited volume having a surface facing the optical module, the surface facing the optical module provides an excited area. The optical module is configured to conduct a first amplifying pass of the laser beam and comprises a reflective element configured to reflect a laser beam coupled into the laser amplifier system multiple times between the reflective element and the laser amplifier module, each time the laser beam is reflected from the reflective element to the laser amplifier module, the laser beam impacts on a respective impact area of the surface of the laser amplifier module. The size of each impact area is smaller than the size of the excited area, and a subset of impact areas of all of the impact areas is located on distinct positions of and/or within the excited area.

Further, the laser amplifier system may be configured to enable the above described method. Specifically, the laser amplifier module may include a laser active medium such as a disk laser providing the excited volume and the excited area as described above. The reflective element may include a main reflective element, for example a mirror, having a reflective surface which faces the surface of the disk laser and the excited area of the disk laser. In particular, the main reflective element may have a reflective surface facing the surface of the laser amplifier module. Thus, the optical module and the laser amplifier module may be optically coupled. In particular, the main reflective element may be arranged with respect to the laser amplifier module and/or disk laser such that the laser beam can travel between the surface of the laser amplifier module and/or disk laser and the reflective surface of the main reflective element. Preferably, the main reflective element may be arranged with respect to the laser amplifier module and/or disk laser such that the laser beam can travel between the excited area of the laser amplifier module and/or disk laser and the reflective surface of the main reflective element. Preferably, no further elements are arranged between the main reflective element and the laser amplifier system and/or disk laser. Further, a perpendicular in the centre of the excited area may be parallel to a perpendicular in the centre of the main reflective element. Preferably, both perpendiculars may coincide.

Preferably, the reflective element is configured to create the impact areas of the surface of the laser amplifier module successively in a temporal order, and wherein a first number of the impact areas is successively created in a first direction on the surface of the laser amplifier module and a second number of the impact areas is successively created in a second direction on the surface of the laser amplifier module. Thus, the reflective element enables the above described line wise scanning of the excited area.

Preferably, the reflective element of the optical module may further comprise an auxiliary reflective element configured to receive the laser beam from the last impact area of the first number of impact areas to reflect the laser beam towards the laser amplifier module and/or disk laser to create the first impact area of the second number of impact areas. That is, the auxiliary reflective element may allow the laser beam to translate from the first line to the second line. With other words, the auxiliary reflective element redirects the laser beam from the last impact area of the first number of impact areas to the first impact area of the second number. For example, the auxiliary reflective element may be provided as a pair of mirrors or as a retroreflective mirror.

Further, the optical module may be configured to distribute the impact areas of the subset evenly within the excited area as described above. For example, the reflective surface of the main reflective element may have a substantially planar surface facing the disk laser and/or the excited area.

Furthermore, an optical module for use in a laser amplifier system including a laser amplifier module is described, wherein the laser amplifier includes an excited volume having a surface facing the optical module, the surface facing the optical module providing an excited area. The optical module comprises a reflective element configured to reflect a laser beam coupled into the laser amplifier system multiple times between the reflective element and the laser amplifier module, each time the laser beam is reflected from the reflective element to the laser amplifier module, the laser beam impacts on a respective impact area of the surface of the laser amplifier module, wherein the size of each impact area is smaller than the size of the excited area, and wherein a subset of impact areas of all the impact areas is located on distinct positions of and/or within the excited area.

The optical module may be further configured as discussed above. In particular, the optical module may be optically couplable to the laser amplifier module. The above aspects may be applicable for continuous wave (cw) laser beams and pulsed laser beams, e.g., ultrashort pulse laser beams. The to be amplified laser beam may be generated by a seed laser module. The seed laser module may generate the laser beam as a continuous wave laser beam or ultrashort pulse laser beam. The generated laser beam may be coupled in the laser amplifier system. For example, the generated laser beam may be directed from the seed laser module towards the laser amplifier module from where the laser beam is reflected to the optical module. The seed laser module may be provided as part of the laser amplifier system or may be provided separate from the laser amplifier system.

These and other objects, features and advantages of the present invention will become more apparent upon reading of the following detailed description of preferred embodiments and accompanying drawings. It should be understood that even though embodiments are separately described, single features thereof may be combined to additional embodiments.

Figure 1 depicts an arrangement of a laser amplifier system according to the present disclosure.

Figure 2 depicts an example of a first amplifying pass of a laser beam.

Figure 3 depicts an embodiment for scanning of a laser amplifier module with a laser beam.

Figure 4 and 5 depicts a further embodiment for scanning of a laser amplifier module with a laser beam.

Figure 6 depicts a diagram showing the beam width of the laser beam dependent on the propagation distance of the laser beam.

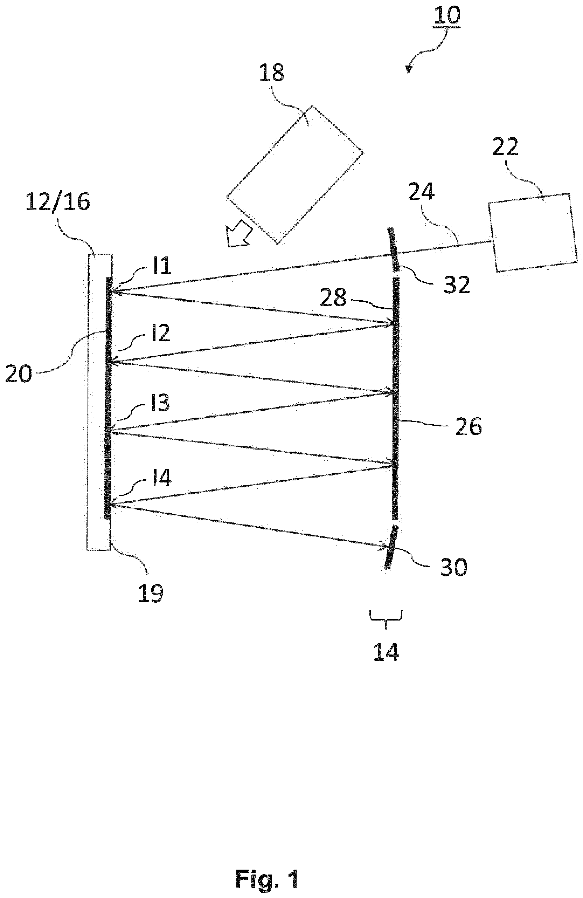

**Figure 1** depicts an embodiment of a laser amplifier system 10 according to the present disclosure. The laser amplifier system 10 comprises a laser amplifier module 12 which is optically coupled and/or coupleable with an optical module 14 so that a laser beam 24 can be reflected between the laser amplifier module 12 and the optical module 14. Preferably, the laser amplifier module 12 is provided as a disk laser 16 having a substantially disk-shaped laser active medium. A pump module 18 which may be part of the laser amplifier system 10 or provided separate to the laser amplifier system 10 is configured to pump and/or excite the laser amplifier module 12 to create an excited volume in the disk laser 16. Hence, a surface 19 of the disk laser 16 facing the optical module 14 provides an excited area 20. In the present disclosure, the term "excited area" may also be referred to as pump spot and is denoted by the same reference sign used for the excited area 20.

Further, a seed laser module 22 which may be part of the laser amplifier system 10 or provided separate to the laser amplifier system 10 generates a (seed) laser beam 24 that is amplified by the laser amplifier system 10. For amplifying the laser beam 24, the laser beam 24 is coupled into the laser amplifier system 10 and reflected multiple times between the laser amplifier module 12 and the optical module 14. Specifically, in a first amplifying pass the laser beam 24 is reflected multiple times between the optical module 14 and the laser amplifier module 12. Each time the laser beam 24 is reflected from the optical module 14 to the laser amplifier module 12, the laser beam 24 impacts on a respective impact area I1-I4 on the pump spot 20 and/or on the surface 19 of the disk-laser 16. Further, with every impact of the laser beam 24 on and/or within the excited area 20, the laser beam 24 extracts some of the energy stored in the disk laser 16 by which the laser beam 24 is amplified.

According to the present disclosure, the size of each impact area I1-I4 is substantially smaller than the size of the excited area/pump spot 20 and a subset of impact areas of all of the impact areas is located on distinct positions of and/or within the excited area/pump spot 20. Thus, the laser beam 24 extracts some of the energy stored in the disk laser 16 from different positions of the excited volume. As discussed above, the size of the impact area I1-I4 is determined by the beam size/beam width/beam diameter of the laser beam 24. In the context of the present disclosure, the beam width/size/diameter of the laser beam 24 may for example correspond to a range between two points in the intensity profile of the laser beam perpendicular to the propagation direction of the laser beam, where the intensity is $1/e^2$ of the peak value in the intensity profile of the laser beam. Alternatively, the beam size and/or beam diameter and/or beam width may correspond to a full-width, half maximum (FWHM) range of the intensity profile of the laser beam 24, i.e. the range between the two points in the intensity profile at which the intensity is half the peak value of the intensity profile. Thus, for the present disclosure, the beam width/size/diameter of the laser beam 24 is considered to be finite.

The optical module 14 comprises a main reflective element 26, for example a mirror, which is arranged opposite to the disk laser 16 such that the main reflective element 26 faces the surface 19 of the disk laser and/or the pump spot 20. Further, the main reflective element 26 has a substantially planar reflective surface 28 facing the disk laser 16 and/or the pump spot 20 such that the laser beam 24 may be reflected between the reflective surface 28 and the disk laser 16. Further, the optical module 14 may comprise at least one auxiliary reflective element, e.g. first auxiliary reflective element 30 and second auxiliary reflective element 32, which are configured to redirect the laser beam 24 as further explained below.

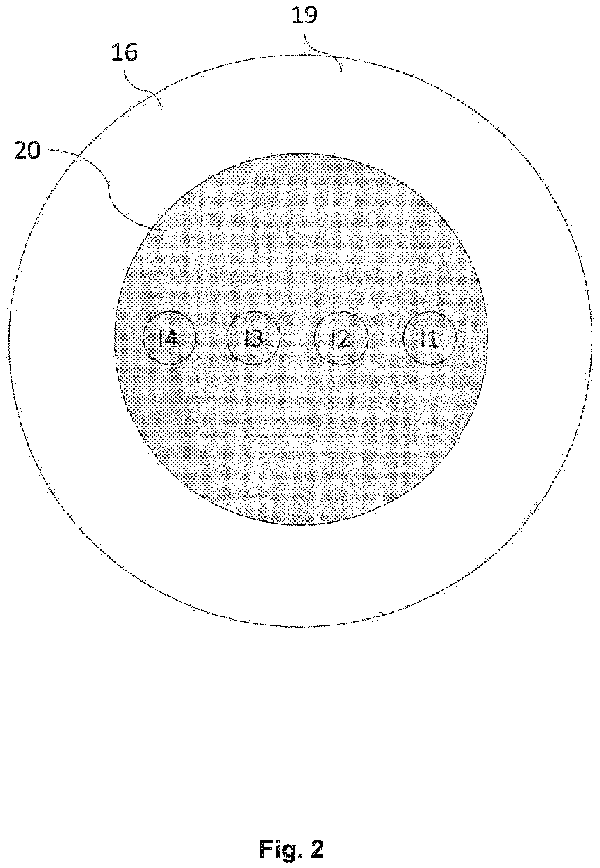

**Figure 2** depicts an example of the first amplifying pass for amplifying the laser beam 24. To simplify the presentation, figure 2 merely depicts the disk laser 16 and the impact areas I1-I4 generated on and/or with the pump spot 20 when the laser beam 24 impacts on the disk laser 16. As shown in figure 2, the size of each of the impact areas I1-I4 is substantially smaller than the size of the pump spot 20. With other words, the size of the pump spot 20 is substantially larger than the size of each of the impact areas I1-I4. Figure 2 shows that all impact areas I1-I4 are positioned within the excited area. Thus, impact areas I1-I4 are included in the subset of impact areas.

Preferably, the size of the pump spot 20 is substantially at least $\frac{4}{\pi}n$ multiplied by the size of an impact area, where n is the number of impact areas in the subset of impact areas. This would allow providing an excited area having a rectangular shape which can accommodate all impact areas of the subset of impact areas without overlapping them.

Further, from each impact area I1-I4 within the excited area, the laser beam 24 may extract some of the energy stored in the disk laser 16. In order to achieve the desired level of amplification of the laser beam 24, the optical module 14 is configured such that the laser beam 24 can scan a plurality of distinct positions within the excited area 20, wherein at each position an impact area is created. Further, the impact areas I1-I4 are distinct from each other and in accordance with an example not in accordance with the present invention at most partially overlap with each other within the excited area 20. In accordance with the invention, the impact areas I1-I4 do not overlap. Hence, from each of the impact areas I1-I4 the laser beam 24 may extract some energy of the energy stored in the disk laser 16, wherein the impact areas I1-I4 have not been scanned earlier by the laser beam 24 during the first amplifying pass.

Further, the impact areas I1-I4 may be arranged such on and/or within the pump spot 20, that adjacent impact areas, for example impact area I1 and impact area I2 are spaced apart from each other by at least 1 to 1.5 times the size of an impact area. Specifically, the minimum distance between the boundaries of said impact areas are spaced apart from each other by at least 1 to 1.5 times the beam size. Hence, diffraction losses can be reduced.

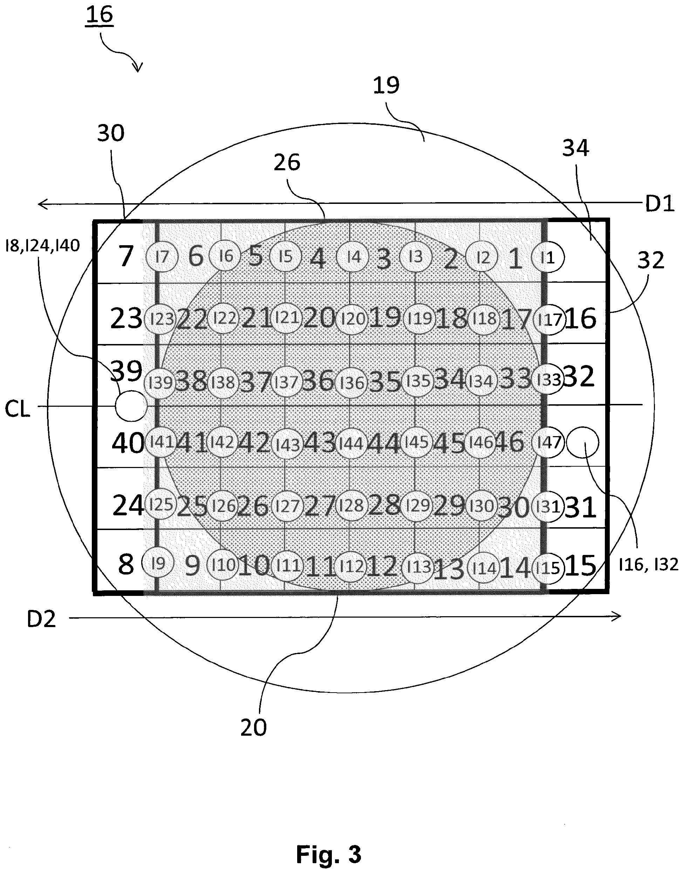

**Figure 3** schematically shows a configuration of an optical module 14 in a top view on the optical module 14 in the direction of the disk laser 16. The optical module 14 comprises a substantially rectangular main reflective element 26. The main reflective element 26 opposes the disk laser 16 and the reflective surface 28 of the main reflective element 26 faces the disk laser 16 and/or the excited area 20. In figure 3, the main reflective element 26 may correspond to a substantially rectangular surface covering tiles 1-6-9-14. Further, the optical module 14 may comprise the first auxiliary reflective element 30 on a first side of the main reflective element 26 and the second auxiliary reflective element 32 on a second side of the main reflective element 26 in a top view on the optical module 14 in the direction of the disk laser 16. Reflective surfaces of the first auxiliary reflective element 30 and the second auxiliary reflective element 32 may also face the disk laser 16. In figure 3, the first auxiliary reflective element 30 corresponds to tiles 7, 23, 39, 40, 24 and 8. The second auxiliary reflective element 32 corresponds to tiles 16, 32, 31 and 15. Tiles 1-46 indicate positions on the optical module 14 where the laser beam 24, which is reflected between the optical module 14 and the disk laser 16, impinges on the optical module 14 when reflected from the disk laser 16 towards the optical module 14.

For conducting the first amplifying pass of the laser beam 24, the laser beam 24 is coupled into the laser amplifier system 10 and directed towards the disk laser 16, where the laser beam 24 impacts at an initial impact area I1. From the initial impact area I1, the laser beam 24 is reflected multiple times between the disk laser 16 and the optical module 14. In particular, the laser beam 24 is reflected from the initial impact area I1 to a first position on the main reflective element 26 indicated by tile 1. Further, impact areas I2 - I47 on the disk laser 14 are created in a temporal order wherein the first number of impact areas indicated by impact areas I1-I7 is successively created in a first direction D1 on the disk laser 16. At least some impact areas (I3, I4 and I5) of the first number of impact areas is created within the excited area 20. Further, the first auxiliary reflective element 30 is configured to redirect the laser beam so that a second number of impact areas (I11-I13) is successively created in a second direction D2 on the disk laser 16. The first direction D1 and second direction D2 extend parallel to the excited area 20 and are parallel to each other. Further, the first direction D1 is opposite to the second direction D2. Hence, the optical module 14 scans the disk laser 16 line by line wherein the first auxiliary reflective element 30 and the second auxiliary reflective element 32 redirects the laser beam 14 to the different lines scanned by the optical module 14. For example, the second auxiliary reflective element 32 may redirect the laser beam 24 from the second line indicated by tiles 8 to 15 to a third line indicated by tiles 16-23.

The first auxiliary reflective element 30 and the second auxiliary reflective element 32 may be provided as retroreflectors, for example as a mirror pair or triple mirror, wherein a line lying on the centre line CL of the first auxiliary reflective element 30 extends through the centre of the pump spot 20 in a top view on the optical module 14 in the direction of the disk laser 16. Further, the first auxiliary reflective element 30 is tilted towards the pump spot 20 (see figure 1) so that the first auxiliary reflective element 30 allows redirecting the laser beam 24 from the first line to the second line. The centre line of the second auxiliary reflective element 32 may be shifted by a half line towards the second line allowing to redirect the laser beam 24 from the second line indicated by tiles 8-15 to the third line indicated by tiles 16-23. Further, the second auxiliary reflective element 32 may also be tilted towards the pump spot 20. The above pattern of scanning line by line is repeated until the laser beam 24 impacts on the last impact area I47 from where the laser beam 24 is reflected towards the optical module 14, in particular towards the second auxiliary reflective element 32. However, the second auxiliary reflective element 32 may have a gap 34 allowing decoupling the laser beam 24 from the laser amplifier system 10 when the laser beam is reflected from impact area I47 towards the second auxiliary reflective element 32.

Instead of providing gap 34 in the second auxiliary reflective element 32, the second auxiliary reflective element 32 may be configured to rotate the polarization of the laser beam 24 and to reflect the laser beam 24 back to the disk laser 16 to conduct a second amplifying pass. By the second amplifying pass, the laser beam 24 traverses the pattern of the first amplifying pass backwards resulting in an additional amplification of the laser beam 24.

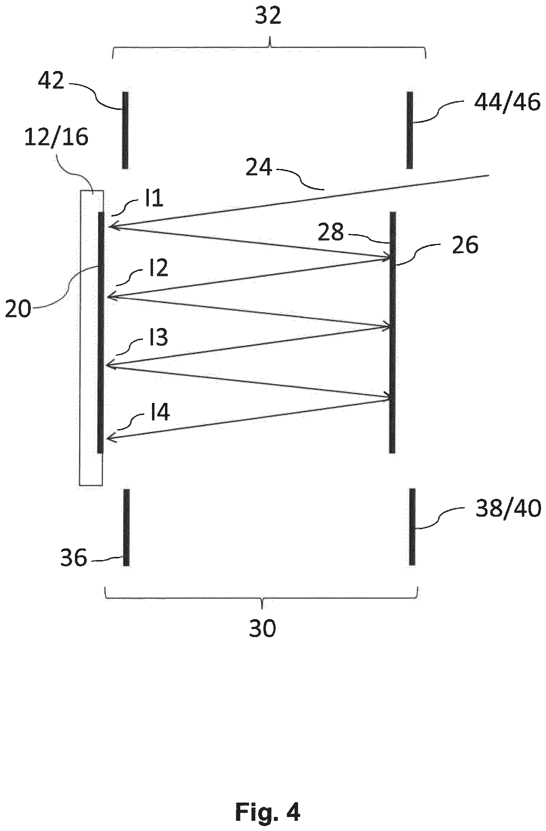

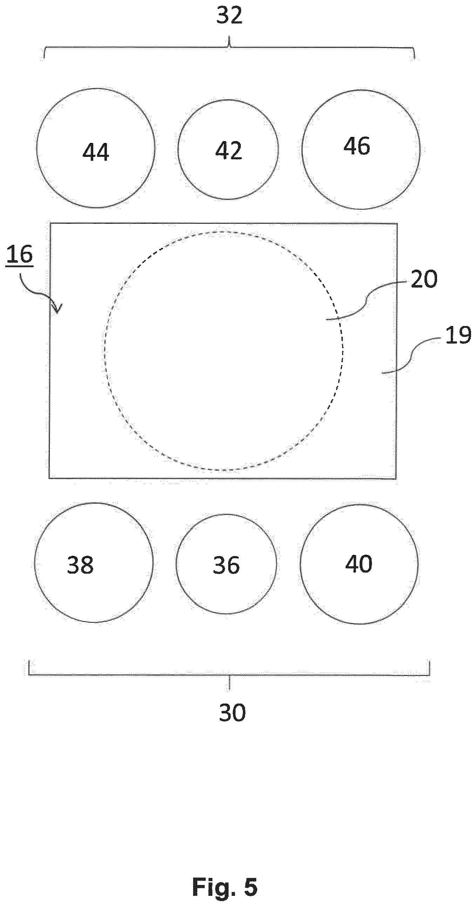

In a further embodiment explained with reference to **figures 4 and 5**, the first auxiliary reflective element 30 and the second auxiliary reflective element 32 are not provided as retroreflectors. Instead, the first auxiliary reflective element 30 comprises a first mirror 36 arranged laterally next to a first side of the disk laser 16 in a top view on the optical module 14 in the direction of the disk laser 16. Further, the first auxiliary reflective element 30 comprises a second mirror 38 and a third mirror 40 arranged laterally next to a first side of the main reflective element 26 in a top view on the optical module 14 in the direction of the disk laser 16. Further, the first mirror 36, the second mirror 38 and the third mirror 40 are arranged on a same side of the disk laser 16. The first mirror 36, the second mirror 38 and the third mirror 40 are arranged such that they allow redirecting the laser beam 24 from a line to a subsequent line as discussed for the embodiment according to figure 3. In particular, redirecting of the laser beam 24 from a line to a subsequent line is performed in that the laser beam 24 is reflected from the disk laser 16 towards the second mirror 38 (tile 7 in figure 3) from which the laser beam is reflected towards the first mirror 36. Afterwards, the first mirror 36 reflects the laser beam towards the third mirror 40 (tile 8 in figure 3) which directs the laser beam towards the disk laser 16.

In the same manner, the second auxiliary reflective element 32 comprises a fourth mirror 42, a fifth mirror 44 and a sixth mirror 46. The fourth mirror 42 is arranged laterally next to a second side of the disk laser 16 in a top view on the optical module 14 in the direction of the disk laser 16, wherein the first side of the disk laser 16 is opposite to the second side of the disk laser 16 with respect to the disk laser 16. The fifth mirror 44 and the sixth mirror 46 are arranged laterally next to a second side of the main reflective element 26 in a top view on the optical module 14 in the direction of the disk laser 16. The first side of the main reflective element 26 is opposite to the second side of the main reflective element 26 with respect to the main reflective element 16. Further, the fourth mirror 42, the fifth mirror 44 and the sixth mirror 46 are arranged at a same side of the disk laser 16. As discussed above for the first mirror 36, the second mirror 38 and the third mirror 40, the fourth mirror 42, the fifth mirror 44 and the sixth mirror 46 are arranged such that they allow redirecting the laser beam 24 from a line to a subsequent line. By providing three single mirrors as compared to the retroreflective mirror described in the embodiment of figure 3, it is possible to exactly adjust the mirrors allowing to adjust the scanning of the disk laser 16 with the laser beam 24.

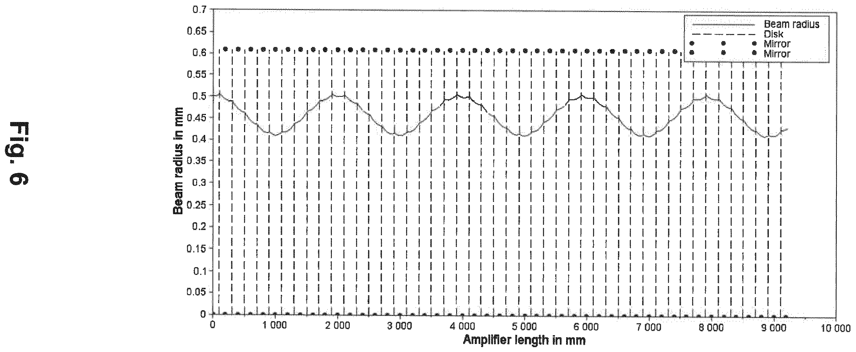

Further, the above configurations of an optical module 14 allow to provide an optical module having a simple setup, i.e. the number of reflective elements is kept low which allows to provide an inexpensive realisation of the optical module. Additionally, the main reflective element 26 can be positioned close to the disk laser 16, for example 9cm. Hence, the distance the laser beam 24 travels during an amplifying pass can be kept short as shown in **figure 6** whereby the quality of the laser beam 24 improves.

**Figure 6** shows on the abscissa the length of the way the laser beam 24 travels during an amplifying pass and on the ordinate the beam size of the laser beam 24. Figure 6 also shows in the X-direction at which length the laser beam impacts on the disk laser 16, the main reflective element 30, the first auxiliary reflective element 30 and the second auxiliary reflective element 32.

## List of Reference Numerals

| | |
|---|---|
| 10 | laser amplifier system |
| 12 | laser amplifier module |
| 14 | optical module |
| 16 | disk laser |
| 18 | pump module |
| 19 | surface |
| 20 | excited area/pump spot |
| 22 | seed laser module |
| 24 | laser beam |
| 26 | main reflective element |
| 28 | reflective surface |
| 30 | first auxiliary reflective element |
| 32 | second auxiliary reflective element |
| 34 | gap |
| 36 | first mirror |
| 38 | second mirror |
| 40 | third mirror |
| 42 | fourth mirror |
| 44 | fifth mirror |
| 46 | sixth mirror |
| CL | centre line of first auxiliary reflective element |
| D1 | first direction |
| D2 | second direction |
| I1-I47 | impact areas |

## Claims

1. Method for amplifying a laser beam in a laser amplifier system (10) including a laser amplifier module (12) and an optical module (14), the method comprising:

   - generating an excited volume in a laser amplifier module (12) so that a surface (19) of the laser amplifier module (12) facing the optical module (14) includes an excited area (20);
   - coupling the laser beam (24) into the laser amplifier system (10);
   - conducting a first amplifying pass by reflecting the laser beam (24) multiple times between the optical module (14) and the laser amplifier module (12), wherein each time the laser beam (24) is reflected from the optical module (14) to the laser amplifier module (14), the laser beam (14) impacts on a respective impact area (I2-I47) of the surface (19) of the laser amplifier module (12),

   wherein the size of each impact area (I2-I47) is smaller than the size of the excited area (20),
   wherein all of the impact areas located within the excited area (20) form a subset of said impact areas and each impact area of said subset is located on a distinct position within the excited area (20),
   wherein adjacent impact areas (I2-I47) of said subset are spaced apart from each other on the surface (19) of the laser amplifier module by at least 1 times the size of the impact area, and

wherein the size of each impact area is determined by the beam diameter of the laser beam (24).

2. The method of claim 1, wherein the impact areas of the subset are distributed evenly within the excited area (20).

3. The method of any one of the preceding claims, wherein adjacent impact areas of said subset are spaced apart from each other on the surface (19) of the laser amplifier module by at least 1,5 times the size of the impact area.

4. The method of any one of the preceding claims, wherein a size ratio between the excited area (20) and each of the impact areas is at least $\frac{8}{\pi}$, at least $\frac{4}{1}$, at least 10:1 or at least 100:1.

5. The method of any one of the preceding claims, wherein the impact areas on the surface (19) of the laser amplifier module are successively created in a temporal order and wherein a first number of the impact areas is successively created in a first direction (D1) on the surface (19) of the laser amplifier module (12) and a second number of the impact areas is successively created in a second direction (D2) on the surface of the laser amplifier module (12).

6. The method of claim 5, wherein the last created impact area of the first number of impact areas is the predecessor of the first created impact area of the second number of impact areas; and wherein optionally the first direction (D1) is opposite to the second direction (D2).

7. The method according to any one of the preceding claims, wherein the generating an excited volume includes generating the excited area (20) having a substantially circular shape or a substantially rectangular shape.

8. A laser amplifier system (10) for amplifying a laser beam (24), the system comprising:

- a laser amplifier module (12); and
- an optical module (14);

wherein the laser amplifier module (12) is configured to include during operation an excited volume having a surface (19) facing the optical module (14), the surface (19) facing the optical module (14) providing an excited area (20);

wherein the optical module (14) is configured to conduct a first amplifying pass of the laser beam (24), and wherein the optical module (14) comprises a reflective element (26) configured to reflect a laser beam (24) coupled into the laser amplifier system (10) multiple times between the reflective element (26) and the laser amplifier module (12), each time the laser beam is reflected from the reflective element (26) to the laser amplifier module (12), the laser beam (24) impacts on a respective impact area (I2-I47) of the surface (19) of the laser amplifier module (12),

wherein the size of each impact area is smaller than the size of the excited area (20),

wherein all of the impact areas located within the excited area (20) form a subset of said impact areas and each impact area of said subset is located on a distinct position within the excited area (20),

wherein adjacent impact areas (I2-I47) of said subset are spaced apart from each other on the surface (19) of the laser amplifier module by at least 1 times the size of the impact area, and

wherein the size of each impact area is determined by the beam diameter of the laser beam (24).

9. The laser amplifier system (10) of claim 8, wherein the laser amplifier module (12) includes a disk laser (16); and/or

wherein the reflective element (26) is configured to distribute the impact areas of the subset evenly within the excited area.

10. The laser amplifier system (10) of claim 8 or 9, wherein the reflective element (26) is configured to create the impact areas of the surface of the laser amplifier module successively in a temporal order, and wherein a first number of the impact areas is successively created in a first direction (D1) on the surface (19) of the laser amplifier module (12) and a second number of the impact areas is successively created in a second direction (D2) on the surface of the laser amplifier module (12).

11. The laser amplifier system (10) of claim 10, wherein the optical module (14) further comprises an auxiliary reflective element configured to receive the laser beam from the last impact area of the first number of impact areas to reflect the laser beam towards the laser amplifier module (12) to create the first impact area of the second number of impact areas.

**Patentansprüche**

1. Verfahren zum Verstärken eines Laserstrahls in einem Laserverstärkersystem (10) mit einem Laserverstärkermodul (12) und einem optischen Modul (14), wobei das Verfahren umfasst:

- Erzeugen eines angeregten Volumens in einem Laserverstärkermodul (12), so dass eine Oberfläche (19) des Laserverstärkermoduls (12), die dem optischen Modul (14) zugewandt ist, einen angeregten Bereich (20) aufweist;
- Koppeln des Laserstrahls (24) in das Laserverstärkersystem (10);
- Durchführen eines ersten Verstärkungsdurchgangs durch mehrfaches Reflektieren des Laserstrahls (24) zwischen dem optischen Modul (14) und dem Laserverstärkermodul (12), wobei jedes Mal, wenn der Laserstrahl (24) von dem optischen Modul (14) zu dem Laserverstärkermodul (14) reflektiert wird, der Laserstrahl (14) auf einem jeweiligen Auftreffbereich (I2 - I47) der Oberfläche (19) des Laserverstärkermoduls (12) auftrifft,

wobei die Größe jedes Auftreffbereichs (I2 - I47) kleiner als die Größe des angeregten Bereichs (20) ist,
wobei alle in dem angeregten Bereich (20) befindlichen Auftreffbereiche eine Teilmenge der Auftreffbereiche bilden und sich jeder Auftreffbereich der Teilmenge an einer unterschiedlichen Position innerhalb des angeregten Bereichs (20) befindet,
wobei benachbarte Auftreffbereiche (I2 - I47) der Teilmenge an der Oberfläche (19) des Laserverstärkermoduls um zumindest das 1-fache der Größe des Auftreffbereichs voneinander beabstandet sind, und
wobei die Größe jedes Auftreffbereichs durch den Strahldurchmesser des Laserstrahls (24) bestimmt wird.

2. Verfahren nach Anspruch 1, wobei die Auftreffbereiche der Teilmenge gleichmäßig innerhalb des angeregten Bereichs (20) verteilt sind.

3. Verfahren nach einem der vorhergehenden Ansprüche, wobei benachbarte Auftreffbereiche der Teilmenge an der Oberfläche (19) des Laserverstärkermoduls um zumindest das 1,5-fache der Größe des Auftreffbereichs voneinander beabstandet sind.

4. Verfahren nach einem der vorstehenden Ansprüche, wobei ein Größenverhältnis zwischen dem angeregten Bereich (20) und jedem der Auftreffbereiche zu-

mindest $\frac{8}{\Pi}$, zumindest $\frac{4}{1}$, zumindest 10:1 oder zumindest 100:1 beträgt.

5. Verfahren nach einem der vorstehenden Ansprüche, wobei die Auftreffbereiche an der Oberfläche (19) des Laserverstärkermoduls nacheinander in einer zeitlichen Reihenfolge erzeugt werden, und wobei eine erste Anzahl der Auftreffbereiche nacheinander in einer ersten Richtung (D1) auf der Oberfläche (19) des Laserverstärkermoduls (12) erzeugt wird und eine zweite Anzahl der Auftreffbereiche nacheinander in einer zweiten Richtung (D2) auf der Oberfläche des Laserverstärkermoduls (12) erzeugt wird.

6. Verfahren nach Anspruch 5, wobei der letzte erzeugte Auftreffbereich der ersten Anzahl von Auftreffbereichen der Vorgänger des ersten erzeugten Auftreffbereichs der zweiten Anzahl von Auftreffbereichen ist; und wobei optional die erste Richtung (D1) der zweiten Richtung (D2) entgegengesetzt ist.

7. Verfahren nach einem der vorstehenden Ansprüche, wobei das Erzeugen eines angeregten Volumens das Erzeugen des angeregten Bereichs (20) umfasst, der eine im Wesentlichen kreisförmige Form oder eine im Wesentlichen rechteckige Form aufweist.

8. Laserverstärkersystem (10) zum Verstärken eines Laserstrahls (24), wobei das System aufweist:

- ein Laserverstärkermodul (12); und
- ein optisches Modul (14);

wobei das Laserverstärkermodul (12) derart konfiguriert ist, dass es während des Betriebs ein angeregtes Volumen mit einer dem optischen Modul (14) zugewandten Oberfläche (19) umfasst, wobei die dem optischen Modul (14) zugewandte Oberfläche (19) einen angeregten Bereich (20) bereitstellt;
wobei das optische Modul (14) konfiguriert ist, um einen ersten Durchgang zur Verstärkung des Laserstrahls (24) durchzuführen, und wobei das optische Modul (14) ein reflektierendes Element (26) aufweist, das konfiguriert ist, einen Laserstrahl (24), der in das Laserverstärkersystem (10) eingekoppelt ist, mehrfach zwischen dem reflektierenden Element (26) und dem Laserverstärkermodul (12) zu reflektieren, der Laserstrahl jedes Mal von dem reflektierenden Element (26) zu dem Laserverstärkermodul (12) reflektiert wird, der Laserstrahl (24) auf einen jeweiligen Auftreffbereich (I2 - I47) der Oberfläche (19) des Laserverstärkermoduls (12) auftrifft,

wobei die Größe jedes Auftreffbereichs kleiner ist als die Größe des angeregten Bereichs (20),

wobei alle in dem angeregten Bereich (20) befindlichen Auftreffbereiche eine Teilmenge der Auftreffbereiche bilden und sich jeder Auftreffbereich der Teilmenge an einer unterschiedlichen Position in dem angeregten Bereich (20) befindet,

wobei benachbarte Auftreffbereiche (I2 - I47) der Teilmenge an der Oberfläche (19) des Laserverstärkermoduls um zumindest das 1-fache der Größe des Auftreffbereichs voneinander beabstandet sind, und

wobei die Größe jedes Aufreffbereichs durch den Strahldurchmesser des Laserstrahls (24) bestimmt wird.

9. Laserverstärkersystem (10) nach Anspruch 8, wobei das Laserverstärkermodul (12) einen Scheibenlaser (16) umfasst; und/oder

wobei das reflektierende Element (26) derart konfiguriert ist, dass es die Auftreffbereiche der Teilmenge gleichmäßig innerhalb des angeregten Bereichs verteilt.

10. Laserverstärkersystem (10) nach Anspruch 8 oder 9, wobei das reflektierende Element (26) derart konfiguriert ist, dass es die Auftreffbereiche der Oberfläche des Laserverstärkermoduls nacheinander in einer zeitlichen Reihenfolge erzeugt, und wobei eine erste Anzahl der Auftreffbereiche nacheinander in einer ersten Richtung (D1) auf der Oberfläche (19) des Laserverstärkermoduls (12) erzeugt wird und eine zweite Anzahl der Auftreffbereiche nacheinander in einer zweiten Richtung (D2) auf der Oberfläche des Laserverstärkermoduls (12) erzeugt wird.

11. Laserverstärkersystem (10) nach Anspruch 10, wobei das optische Modul (14) ferner ein Hilfsreflexionselement aufweist, welches derart konfiguriert ist, dass es den Laserstrahl von dem letzten Auftreffbereich der ersten Anzahl von Auftreffbereichen empfängt, um den Laserstrahl zu dem Laserverstärkermodul (12) zu reflektieren, um den ersten Auftreffbereich der zweiten Anzahl von Auftreffbereichen zu erzeugen.

**Revendications**

1. Procédé d'amplification d'un faisceau laser dans un système amplificateur de laser (10) comportant un module amplificateur de laser (12) et un module optique (14), le procédé comprenant :

- la génération d'un volume excité dans un module amplificateur de laser (12) de telle sorte qu'une surface (19) du module amplificateur de laser (12) faisant face au module optique (14) comporte une zone excitée (20) ;
- le couplage du faisceau laser (24) dans le système amplificateur de laser (10) ;
- la réalisation d'une première passe d'amplification en réfléchissant le faisceau laser (24) à maintes reprises entre le module optique (14) et le module amplificateur de laser (12), dans lequel chaque fois le faisceau laser (24) est réfléchi depuis le module optique (14) au module amplificateur de laser (14), le faisceau laser (14) atteint une zone d'impact (I2 - I47) respective de la surface (19) du module amplificateur de laser (12),

dans lequel la taille de chaque zone d'impact (I2 - I47) est plus petite que la taille de la zone excitée (20),

dans lequel toutes les zones d'impact situées dans la zone excitée (20) forment un sous-ensemble desdites zones d'impact et chaque zone d'impact dudit sous-ensemble est située sur une position distincte dans la zone excitée (20),

dans lequel des zones d'impact (I2 - I47) adjacentes dudit sous-ensemble sont espacées les unes des autres sur la surface (19) du module amplificateur de laser d'au moins 1 fois la taille de la zone d'impact, et

dans lequel la zone de chaque zone d'impact est déterminée par le diamètre de faisceau du faisceau laser (24).

2. Procédé selon la revendication 1, dans lequel les zones d'impact du sous-ensemble sont réparties de manière homogène dans la zone excitée (20).

3. Procédé selon l'une quelconque des revendications précédentes, dans lequel des zones d'impact adjacentes dudit sous-ensemble sont espacées les unes des autres sur la surface (19) du module amplificateur laser d'au moins 1,5 fois la taille de la zone d'impact.

4. Procédé selon l'une quelconque des revendications précédentes, dans lequel un ratio de taille entre la zone excitée (20) et chacune des zones d'impact est d'au moins $\frac{8}{\Pi}$, d'au moins $\frac{4}{1}$, d'au moins 10:1 ou d'au moins 100:1.

5. Procédé selon l'une quelconque des revendications précédentes, dans lequel les zones d'impact de la surface (19) du module amplificateur de laser sont créées successivement dans un ordre temporel et dans lequel un premier nombre des zones d'impact est successivement créé dans une première direction (D1) sur la surface (19) du module amplificateur de laser (12) et un deuxième nombre des zones d'impact est successivement créé dans une deuxième direction (D2) sur la surface du module amplificateur laser (12).

6. Procédé selon la revendication 5, dans lequel la dernière zone d'impact créée du premier nombre de zones d'impact est le prédécesseur de la première zone d'impact créée du deuxième nombre de zones d'impact ; et dans lequel en option la première direction (D1) est opposée à la deuxième direction (D2).

7. Procédé selon l'une quelconque des revendications précédentes, dans lequel la génération d'un volume excité comporte la génération de la zone excitée (20) présentant une forme sensiblement circulaire ou une forme sensiblement rectangulaire.

8. Système amplificateur de laser (10) permettant d'amplifier un faisceau laser (24), le système comprenant :

   - un module amplificateur de laser (12) ; et
   - un module optique (14) ;

   dans lequel le module amplificateur de laser (12) est configuré pour comporter pendant l'opération un volume excité présentant une surface (19) faisant face au module optique (14), la surface (19) faisant face au module optique (14) fournissant une zone excitée (20) ;
   dans lequel le module optique (14) est configuré pour réaliser une première passe d'amplification du faisceau laser (24), et dans lequel le module optique (14) comprend un élément réfléchissant (26) configuré pour réfléchir un faisceau laser (24) couplé dans le système amplificateur de laser (10) à maintes reprises entre l'élément réfléchissant (26) et le module amplificateur de laser (12), le faisceau laser est réfléchi à chaque fois depuis l'élément réfléchissant (26) au module amplificateur de laser (12), le faisceau laser (24) atteint une zone d'impact (I2 - I47) respective de la surface (19) du module amplificateur de laser (12),
   dans lequel la taille de chaque zone d'impact est plus petite que la taille de la zone excitée (20),
   dans lequel toutes les zones d'impact situées dans la zone excitée (20) forment un sous-ensemble desdites zones d'impact et chaque zone d'impact dudit sous-ensemble est située sur une position distincte dans la zone excitée (20),
dans lequel des zones d'impact (I2 - I47) adjacentes dudit sous-ensemble sont espacées les unes des autres sur la surface (19) du module amplificateur de laser d'au moins 1 fois la taille de la zone d'impact, et
dans lequel la taille de chaque zone d'impact est déterminée par le diamètre de faisceau du faisceau laser (24).

9. Système amplificateur de laser (10) selon la revendication 8, dans lequel le module amplificateur de laser (12) comporte un laser à disque (16) ; et/ou dans lequel l'élément réfléchissant (26) est configuré pour répartir les zones d'impact du sous-ensemble de manière homogène dans la zone excitée (20).

10. Système amplificateur de laser (10) selon la revendication 8 ou 9, dans lequel l'élément réfléchissant (26) est configuré pour créer les zones d'impact de la surface du module amplificateur de laser successivement dans un ordre temporel, et dans lequel un premier nombre des zones d'impact est créé successivement dans une première direction (D1) sur la surface (19) du module amplificateur laser (12) et un deuxième nombre des zones d'impact est créé successivement dans une deuxième direction (D2) sur la surface du module amplificateur de laser (12).

11. Système amplificateur de laser (10) selon la revendication 10, dans lequel le module optique (14) comprend en outre un élément réfléchissant auxiliaire configuré pour recevoir le faisceau laser depuis la dernière zone d'impact du premier nombre des zones d'impact pour réfléchir le faisceau laser vers le module amplificateur de laser (12) pour créer la première zone d'impact du deuxième nombre des zones d'impact.

**Fig. 1**

**Fig. 2**

**Fig. 3**

**Fig. 4**

**Fig. 5**

Fig. 6

**EP 3 823 111 B1**

**REFERENCES CITED IN THE DESCRIPTION**

**Patent documents cited in the description**

- US 2006153257 A1
- US 2005195474 A1
- US 5546222 A